# FASCICULE DE BREVET EUROPEEN

(11) **EP 2 941 649 B1**
(45) Date de publication et mention de la délivrance du brevet: **19.07.2023**
(21) Numéro de dépôt: 14704607.2
(22) Date de dépôt: 03.01.2014
(51) Int. Cl.: G01N 35/10

(54) **ENSEMBLE D'ANALYSE POUR APPAREIL D'ANALYSE**
ANALYSEEINHEIT FÜR EINE ANALYSEVORRICHTUNG
ANALYSIS UNIT FOR ANALYSIS DEVICE

(30) Priorité: 04.01.2013 FR 1350046
(43) Date de publication de la demande: 11.11.2015
(73) Titulaire: IMMUNODIAGNOSTIC SYSTEMS FRANCE, 21320 Pouilly en Auxois (FR)
(72) Inventeur: ROUSSEAU, Alain, F-75001 Paris (FR); LERAT, Olivier, F-21410 Agey (FR); BRUTT, Norbert, F-21320 Beurey Bauguay (FR)
(74) Mandataire: Germain Maureau
(86) Numéro de dépôt international: PCT/FR2014/050003
(87) Numéro de publication internationale: WO 2014/106721

(56) Documents cités:
- EP-A1- 2 043 786
- WO-A1-2013/013687
- WO-A2-99/61919
- DE-A1- 2 713 678
- JP-A- 2010 085 125
- US-A- 4 004 883
- US-A- 5 254 315
- US-A1- 2007 183 252

## Description

La présente invention concerne un ensemble d'analyse pour appareil d'analyse, et plus particulièrement pour appareil d'analyse pour diagnostic in vitro.

Le document EP 2 043 786 décrit un ensemble d'analyse destiné à être utilisé dans un appareil d'analyse pour diagnostic in vitro, comprenant :
- un récipient d'un premier type contenant une solution comportant des particules magnétiques destinées à capturer un analyte à détecter et/ou doser,
- une cartouche comportant plusieurs récipients d'un deuxième type assemblés les uns aux autres, chaque récipient du deuxième type contenant un produit réactif liquide,
- un portoir destiné à recevoir la cartouche, et
- un dispositif d'agitation comprenant un organe de réception monté mobile en rotation sur le portoir et délimitant un logement de réception destiné à recevoir le récipient du premier type, l'organe de réception présentant sur sa surface extérieure une denture d'accouplement destinée à coopérer avec une unité d'entraînement de l'appareil d'analyse de manière à entraîner en rotation, en condition d'utilisation, le récipient du premier type reçu dans le logement de réception de l'organe de réception.

Un tel ensemble d'analyse permet d'assurer une agitation de la solution contenue dans le récipient du premier type, et donc d'éviter une agglutination et une sédimentation des particules magnétiques contenues dans cette solution qui pourraient nuire aux analyses ultérieures réalisées à partir de ladite solution.

Certaines analyses nécessitent de réaliser successivement différentes séparations biologiques afin de doser et/ou détecter un analyte particulier. De telles analyses requièrent alors l'utilisation successive de différentes particules magnétiques, et donc l'insertion dans l'appareil d'analyse de plusieurs ensembles d'analyse comprenant des récipients du premier type contenant des solutions à base de particules magnétiques différentes.

En outre, les analyses à effectuer étant diverses et variées, il peut s'avérer nécessaire de prévoir un nombre très important d'ensembles d'analyse dans un appareil d'analyse afin d'avoir à disposition les différentes particules magnétiques indispensables pour la réalisation de ces analyses.

La capacité de stockage d'un appareil d'analyse étant réduite, il s'avère nécessaire de régulièrement remplacer les différents ensembles d'analyse par d'autres ensembles d'analyse au cours d'une même journée, ce qui nuit au rendement de l'appareil d'analyse.

La présente invention vise à remédier à ces inconvénients.

Le problème technique à la base de l'invention consiste donc à fournir un ensemble d'analyse qui soit de structure simple et économique, tout en permettant d'améliorer le rendement d'un appareil d'analyse recevant ledit ensemble d'analyse.

A cet effet, la présente invention concerne un ensemble d'analyse selon la revendication 1.

Une telle configuration de l'ensemble d'analyse selon l'invention permet d'assurer le stockage sur le portoir d'au moins deux récipients du premier type contenant des solutions comportant des particules magnétiques, et l'agitation de ces deux récipients de manière aisée à partir d'une même unité d'entraînement de l'appareil d'analyse.

Ainsi, l'ensemble d'analyse selon l'invention permet par exemple le stockage sur le portoir de deux récipients contenant la même solution à base de particules magnétiques, ce qui permet d'augmenter le nombre de tests identiques pouvant être réalisés à l'aide d'un même ensemble d'analyse.

L'ensemble d'analyse selon l'invention permet également par exemple le stockage sur le portoir de deux récipients contenant des solutions à base de particules magnétiques différentes, ce qui permet de réaliser des tests différents à l'aide d'un même ensemble d'analyse.

L'ensemble d'analyse selon l'invention permet par conséquent de réaliser, avec un nombre d'ensembles d'analyse réduit, un nombre important de tests, ce qui permet d'améliorer la capacité et le rendement d'un appareil d'analyse, et donc de diminuer les coûts associés à chaque test.

Selon un mode de réalisation de l'invention, le dispositif d'agitation comprend une pluralité d'organes de réception.

Selon un mode de réalisation de l'invention, chacun des premier et deuxième organes de réception comporte une portion de réception délimitant le logement de réception correspondant, la portion de réception de chacun des premier et deuxième organes de réception étant sensiblement cylindrique, et s'étendant au moins en partie dans un passage traversant de forme complémentaire ménagé sur le portoir.

Selon un mode de réalisation de l'invention, chacun des premier et deuxième organes de réception comprend en outre une portion de montage sensiblement cylindrique s'étendant de manière coaxiale par rapport à, et de préférence à partir de, la portion de réception correspondante, la portion de montage de chacun des premier et deuxième organes de réception étant montée libre en rotation dans un alésage ménagé sur le portoir et débouchant en regard du passage traversant dans lequel est montée la portion de réception correspondante.

Selon un mode de réalisation de l'invention, chaque organe de réception comporte sur sa surface extérieure une denture d'accouplement, les dentures d'accouplement des organes de réception formant au moins en partie les moyens d'accouplement.

Selon un mode de réalisation de l'invention, les moyens d'accouplement comportent une pluralité d'organes d'accouplement montés mobiles en rotation sur le portoir et agencés chacun pour coupler en rotation les dentures d'accouplement de deux organes de réception adjacents.

Selon un mode de réalisation de l'invention, chacun des premier et deuxième organes de réception, et de préférence chaque organe de réception, comprend des moyens d'immobilisation agencés pour immobiliser en rotation, en condition d'utilisation, le récipient correspondant logé dans ledit organe de réception.

Les moyens d'immobilisation de chacun des premier et deuxième organes de réception comportent par exemple au moins une nervure d'immobilisation destinée à coopérer avec une rainure d'immobilisation complémentaire ménagée sur la paroi extérieure du récipient correspondant.

Selon un mode de réalisation de l'invention, au moins l'un des premier et deuxième organes de réception comprend des moyens de blocage en translation agencés pour bloquer en translation ledit organe de réception par rapport au portoir. De façon avantageuse, la portion de montage de chacun des premier et deuxième organes de réception comprend au moins un élément d'encliquetage agencé pour coopérer avec le portoir de manière à bloquer en translation ledit organe de réception par rapport au portoir.

Les moyens de maintien en position comprennent par exemple une pluralité d'encoches destinées à coopérer chacune avec le col d'un récipient stationnaire reçu dans le logement de stockage. Avantageusement, chacune des encoches s'étend sensiblement perpendiculairement aux axes de rotation des organes de réception.

Selon un mode de réalisation de l'invention, l'ensemble d'analyse comprend les premier et deuxième récipients du premier type.

Selon un mode de réalisation de l'invention, l'ensemble d'analyse comprend une pluralité de deuxièmes récipients du premier type, et les moyens d'accouplement sont agencés pour coupler en rotation le premier récipient du premier type et la pluralité de deuxièmes récipients du premier type lorsque lesdits premier et deuxièmes récipients sont reçus sur le portoir, les moyens d'accouplement étant conformés pour entraîner en rotation la pluralité de deuxièmes récipients du premier type lorsque le premier récipient du premier type est entraîné en rotation.

Selon un mode de réalisation de l'invention, chacun des premier et deuxième récipients contient une solution comportant des particules magnétiques destinées à capturer un analyte à détecter et/ou doser.

Selon un mode de réalisation de l'invention, l'ensemble d'analyse comprend en outre une pluralité de récipients stationnaires destinés à être reçus dans le logement de stockage du portoir et destinés à contenir chacun un produit réactif liquide.

Selon un mode de réalisation de l'invention, chacun des premier et deuxième récipients du premier type comporte un corps et un col réalisés en matière synthétique, par exemple par moulage par soufflage.

Selon un mode de réalisation de l'invention, le col de chaque récipient du premier type est équipé d'un bouchon d'obturation qui peut par exemple être pourvu d'une paroi perforable.

Selon un mode de réalisation de l'invention, le corps de chaque récipient du premier type est sensiblement cylindrique, et le corps de chaque récipient du deuxième type est sensiblement parallélépipédique.

Selon un mode de réalisation de l'invention, le portoir comprend au moins trois organes de réception de préférence alignés.

De toute façon l'invention sera bien comprise à l'aide de la description qui suit en référence au dessin schématique annexé représentant, à titre d'exemples non limitatifs, deux formes d'exécution de cet ensemble d'analyse.
Figure 1 est une vue en perspective d'un ensemble d'analyse selon un premier mode de réalisation de l'invention.
Figure 2 est une vue partielle en perspective, en éclaté, de l'ensemble d'analyse de la figure 1.
Figure 3 est une vue en perspective d'un ensemble d'analyse selon un deuxième mode de réalisation de l'invention.

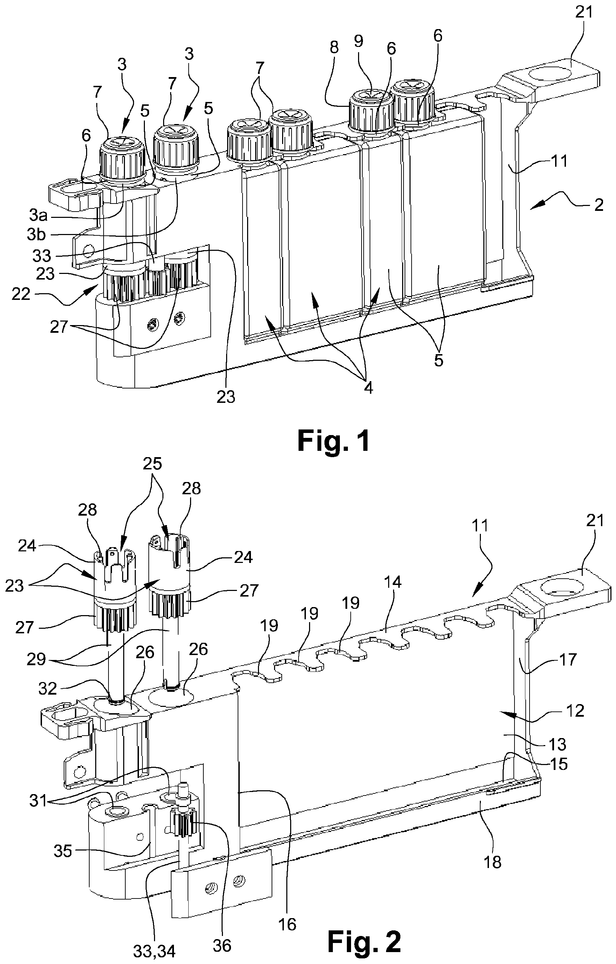

Les figures 1 et 2 représentent un ensemble d'analyse 2 destiné à être utilisé dans un appareil d'analyse pour diagnostic in vitro.

L'ensemble d'analyse 2 comprend une pluralité de récipients 3 d'un premier type contenant chacun une solution comportant des particules magnétiques destinées à capturer un analyte à analyser, et une pluralité de récipients 4 d'un deuxième type contenant chacun un produit réactif liquide. Selon le mode de réalisation représenté sur les figures 1 et 2, l'ensemble d'analyse 2 comprend plus particulièrement un premier et un deuxième récipients 3a, 3b du premier type.

Chaque récipient 3, 4 comporte un corps 5 et un col 6 réalisés en matière synthétique par exemple par moulage par soufflage. Le corps 5 de chaque récipient 3 du premier type est sensiblement cylindrique, tandis que le corps 5 de chaque récipient 4 du deuxième type est sensiblement parallélépipédique. Il est à noter que les récipients 4 du deuxième type peuvent être de différentes tailles, et donc de différentes contenances.

Le col 6 de chaque récipient 3, 4 est équipé d'un bouchon d'obturation 7 comprenant une jupe 8 présentant, sur sa face interne, des moyens de fixation par vissage ou encliquetage agencés pour coopérer avec des moyens de fixation complémentaires prévus sur ledit col 6, et une paroi d'extrémité 9 perforable. La paroi d'extrémité 9 comprend par exemple plusieurs fentes permettant une insertion ou un retrait aisé(e) d'une sonde ou d'une aiguille de l'appareil d'analyse dans le récipient correspondant.

Les récipients 3 du premier type comportent avantageusement des ailettes longitudinales ménagées sur leur paroi intérieure.

Les récipients 4 du deuxième type peuvent par exemple être fixés les uns aux autres par l'intermédiaire d'une étiquette autocollante de manière à former une cartouche. L'étiquette autocollante peut éventuellement comporter, sur sa face extérieure, un code à barres renfermant des indications concernant la cartouche, notamment par exemple l'identification des produits réactifs utilisés et l'analyse à effectuer.

Comme montré plus particulièrement sur la figure 2, l'ensemble d'analyse 2 comprend également un portoir 11 réalisé par exemple en matière synthétique.

Le portoir 11 comporte un logement de stockage 12 destiné à recevoir une pluralité de récipients 4 du deuxième type. Le logement de stockage 12 est délimité par une paroi de fond 13, des parois inférieure et supérieure 14, 15 sensiblement parallèles et s'étendant chacune sensiblement perpendiculairement à la paroi de fond 13, deux parois latérales 16, 17 sensiblement parallèles et s'étendant chacune sensiblement perpendiculairement à la paroi de fond 13, et enfin par un rebord 18 s'étendant sensiblement perpendiculairement à partir de la paroi inférieure 15.

Le portoir 11 comporte également des moyens de maintien en position agencés pour coopérer avec les cols 6 des récipients 4 lorsque ces derniers sont reçus dans le logement de stockage 12. Les moyens de maintien en position comprennent avantageusement une pluralité d'encoches de maintien 19 ménagées sur la paroi supérieure 14 et régulièrement réparties sur la longueur de cette dernière. Chaque encoche de maintien 19 est destinée à coopérer avec le col 6 d'un récipient 4 reçu dans le logement de stockage 12 de manière à immobiliser ledit récipient 4 par rapport au portoir 11. Les encoches de maintien 19 s'étendent dans un plan sensiblement perpendiculaire à l'axe des cols 6 des récipients 4 lorsque ces derniers sont fixés sur le portoir 11.

Afin d'assurer une fixation optimale des récipients 4 sur le portoir 11, chaque encoche de maintien 19 présente une forme au moins en partie complémentaire de celle du col 6 de chaque récipient 4, et la distance entre les parois supérieure et inférieure 14, 15 correspond sensiblement à la hauteur des corps 6 des récipients 4.

Pour fixer les récipients 4 sur le portoir 11, il suffit d'engager tout d'abord la base de chaque récipient 4 entre le rebord 18 et la paroi de fond 13, puis d'engager le col 6 de chaque récipient 4 dans l'encoche de maintien 19 respective.

Le portoir 11 comporte également une poignée de maintien 21 facilitant la manipulation du portoir 11, et notamment l'insertion et le retrait de l'ensemble d'analyse 2 dans et hors d'un appareil d'analyse.

L'ensemble d'analyse 2 comprend en outre un dispositif d'agitation 22 monté sur le portoir 11. Le dispositif d'agitation 22 comprend une pluralité d'organes de réception 23 montés mobiles en rotation sur le portoir 11. Selon le mode de réalisation représenté sur les figures 1 et 2, le dispositif d'agitation 22 comprend deux organes de réception 23.

Chaque organe de réception 23 comporte une portion de réception 24 délimitant un logement de réception 25 dans lequel est destiné à être logé au moins en partie un récipient 3 du premier type. La portion de réception 24 de chaque organe de réception 23 est sensiblement cylindrique, et s'étend au moins en partie dans un passage traversant 26 de forme complémentaire ménagé sur le portoir 11. La portion de réception 24 de chaque organe de réception 23 comprend, sur sa surface extérieure, une denture d'accouplement 27 annulaire et coaxiale avec l'axe de rotation dudit organe de réception 23. La portion de réception 24 de chaque organe de réception 23 comprend en outre, sur sa surface intérieure, au moins une nervure d'immobilisation 28 destinée à coopérer avec une rainure d'immobilisation complémentaire ménagée sur la paroi extérieure du récipient 3 correspondant, de manière à immobiliser en rotation ledit récipient 3 par rapport à l'organe de réception 23 correspondant.

Chaque organe de réception 23 comprend également une portion de montage 29 cylindrique s'étendant de manière coaxiale à partir de la portion de réception 24 correspondante. La portion de montage 29 de chaque organe de réception 23 est montée libre en rotation dans un alésage 31 ménagé sur le portoir 11 et débouchant en regard du passage traversant 26 dans lequel est montée la portion de réception 24 correspondante.

Il est à noter que la portion de montage 29 de chaque organe de réception 23 comprend, au niveau de son extrémité libre, au moins un élément d'encliquetage 32 agencé pour coopérer avec le portoir 11 de manière à bloquer en translation l'organe de réception 23 correspondant par rapport au portoir 11.

Le dispositif d'agitation 22 comporte de plus un organe d'accouplement 33 monté mobile en rotation sur le portoir 11 et agencé pour coupler en rotation les dentures d'accouplement 27 des organes de réception 23. L'organe d'accouplement 33 comprend une portion de montage 34 montée libre en rotation dans un alésage 35 ménagé sur le portoir 11, et un pignon d'accouplement 36 solidaire de la portion de montage 34 et engrenant avec les dentures d'accouplement 27 des organes de réception 23.

Les dentures d'accouplement 27 et l'organe d'accouplement 33 sont agencés pour coupler en rotation les deux organes de réception 23, et sont conformés pour entraîner en rotation les deux organes de réception 23, et donc les récipients 3 reçus dans les organes de réception 23, lorsque l'un des organes de réception 23 est entraîné en rotation par une unité d'entraînement d'un appareil d'analyse. Avantageusement, la denture d'accouplement 27 de l'organe de réception 23 opposé au logement de stockage 12, c'est-à-dire destiné à loger le récipient 3a, est agencée pour coopérer avec l'unité d'entraînement d'un appareil d'analyse. L'unité d'entraînement de l'appareil d'analyse peut par exemple être formée par une crémaillère ou une roue dentée agencée pour coopérer avec la denture d'accouplement 27 de l'organe de réception 23 opposé au logement de stockage 12.

De préférence, le dispositif d'agitation 22 est conformé pour entraîner en rotation les récipients 3 du premier type alternativement dans un premier sens et dans un deuxième sens opposé au premier sens.

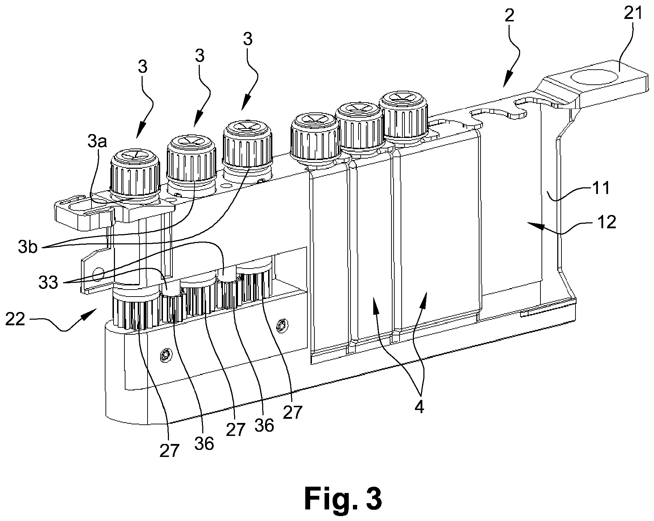

La figure 3 représente un ensemble d'analyse 2 selon un deuxième mode de réalisation de l'invention qui diffère de celui représenté sur les figures 1 et 2 essentiellement en ce que l'ensemble d'analyse comporte trois récipients 3 du premier type, trois organes de réception 23 alignés et deux organes d'accouplement 33 agencés chacun pour coupler en rotation deux organes de réception 23 adjacents.

Comme il va de soi, l'invention ne se limite pas aux seules formes d'exécution de cet ensemble d'analyse, décrites ci-dessus à titre d'exemples, elle en embrasse au contraire toutes les variantes de réalisation conformes aux revendications.

## Revendications

1. Ensemble d'analyse (2) pour appareil d'analyse, comprenant :
- un portoir (11) destiné à être inséré dans l'appareil d'analyse, le portoir (11) étant adapté pour recevoir au moins un premier récipient (3a) d'un premier type, le portoir (11) comprenant :
un logement de stockage (12) destiné à recevoir une pluralité de récipients stationnaires (4) d'un deuxième type pourvus chacun d'un col (6) équipé d'un dispositif d'obturation (7), et
des moyens de maintien en position agencés pour coopérer avec les cols (6) des récipients stationnaires (4) lorsque les récipients stationnaires sont reçus dans le logement de stockage (12),
- un dispositif d'agitation (22) adapté pour être monté sur le portoir (11) et destiné à coopérer avec une unité d'entraînement d'un appareil d'analyse, le dispositif d'agitation (22) étant agencé pour entraîner en rotation au moins le premier récipient (3a) du premier type lorsque ledit premier récipient (3a) est reçu sur le portoir (11) et lorsque le dispositif d'agitation (22) coopère avec l'unité d'entraînement de l'appareil d'analyse,
**caractérisé en ce que** le portoir (11) est adapté pour recevoir au moins un deuxième récipient (3b) du premier type, **en ce que** le dispositif d'agitation (22) comprend des moyens d'accouplement agencés pour coupler en rotation au moins les premier et deuxième récipients (3a, 3b) du premier type lorsque lesdits premier et deuxième récipients (3a, 3b) sont reçus sur le portoir (11), les moyens d'accouplement étant conformés pour entraîner en rotation au moins le deuxième récipient (3b) lorsque le premier récipient (3a) est entraîné en rotation, et **en ce que** le dispositif d'agitation (22) comprend au moins un premier et un deuxième organes de réception (23) montés mobiles en rotation sur le portoir (11) et délimitant respectivement deux logements de réception (25) conformés pour loger, en condition d'utilisation, respectivement les premier et deuxième récipients (3a, 3b), chacun des premier et deuxième organes de réception (23) comportant sur sa surface extérieure une denture d'accouplement (27), les dentures d'accouplement (27) des premier et deuxième organes de réception (23) formant au moins en partie les moyens d'accouplement, les moyens d'accouplement comportant en outre au moins un organe d'accouplement (33) monté mobile en rotation sur le portoir (11) et agencé pour coupler en rotation les dentures d'accouplement (27) des premier et deuxième organes de réception (23).

2. Ensemble d'analyse selon la revendication 1, dans lequel chacun des premier et deuxième organes de réception (23) comporte une portion de réception (24) délimitant le logement de réception (25) correspondant, la portion de réception (24) de chacun des premier et deuxième organes de réception (23) étant sensiblement cylindrique, et s'étendant au moins en partie dans un passage traversant (26) de forme complémentaire ménagé sur le portoir (11).

3. Ensemble d'analyse selon la revendication 2, dans lequel chacun des premier et deuxième organes de réception (23) comprend en outre une portion de montage (29) sensiblement cylindrique s'étendant de manière coaxiale par rapport à la portion de réception (24) correspondante, la portion de montage (29) de chacun des premier et deuxième organes de réception (23) étant montée libre en rotation dans un alésage (31) ménagé sur le portoir (11) et débouchant en regard du passage traversant (26) dans lequel est montée la portion de réception (24) correspondante.

4. Ensemble d'analyse selon l'une des revendications 1 à 3, dans lequel chacun des premier et deuxième organes de réception (23) comprend des moyens d'immobilisation agencés pour immobiliser en rotation, en condition d'utilisation, le récipient correspondant logé dans ledit organe de réception (23).

5. Ensemble d'analyse selon la revendication 4, dans lequel les moyens d'immobilisation de chacun des premier et deuxième organes de réception comportent au moins une nervure d'immobilisation (28) destinée à coopérer avec une rainure d'immobilisation complémentaire ménagée sur la paroi extérieure du récipient (3a, 3b) correspondant.

6. Ensemble d'analyse selon l'une des revendications 1 à 5, dans lequel au moins l'un des premier et deuxième organes de réception (23) comprend des moyens de blocage en translation agencés pour bloquer en translation ledit organe de réception (23) par rapport au portoir (11).

7. Ensemble d'analyse selon l'une des revendications 1 à 6, dans lequel les moyens de maintien en position comprennent une pluralité d'encoches (19) destinées à coopérer chacune avec le col (6) d'un récipient stationnaire (4) reçu dans le logement de stockage (12).

8. Ensemble d'analyse selon la revendication 7, dans lequel chacune des encoches (19) s'étend sensiblement perpendiculairement aux axes de rotation des organes de réception (23).

9. Ensemble d'analyse selon l'une des revendications 1 à 8, dans lequel le portoir (11) comporte une poignée de maintien (21) conformée pour permettre l'insertion et le retrait du portoir (11) dans et hors de l'appareil d'analyse.

## Patentansprüche

1. Analyseanordnung (2) für Analysegerät, umfassend:
- Ein Gestell (11), das dazu bestimmt ist, ins Analysegerät eingesetzt zu werden, wobei das Gestell (11) dazu geeignet ist, mindestens einen ersten Behälter (3a) eines ersten Typs aufzunehmen, wobei das Gestell (11) umfasst:
einen Lagerungssitz (12), der dazu bestimmt ist, eine Vielzahl von stationären Behältern (4) eines zweiten Typs aufzunehmen, die jeweils mit einem Hals (6) ausgestattet sind, der mit einer Verschlussvorrichtung (7) ausgerüstet ist, und
Positionshaltemittel, die eingerichtet sind, um mit den Hälsen (6) der stationären Behälter (4) zusammenzuwirken, wenn die stationären Behälter im Lagerungssitz (12) aufgenommen werden,
- eine Rührvorrichtung (22), die dazu geeignet ist, im Gestell (11) eingebaut zu werden und dazu bestimmt ist, mit einer Antriebseinheit eines Analysegeräts zusammenzuwirken, wobei die Rührvorrichtung (22) eingerichtet ist, um mindestens den ersten Behälter (3a) des ersten Typs rotierend anzutreiben, wenn der erste Behälter (3a) im Gestell (11) aufgenommen wird und wenn die Rührvorrichtung (22) mit der Antriebseinheit des Analysegeräts zusammenwirkt,
**dadurch gekennzeichnet, dass** das Gestell (11) geeignet ist, mindestens einen zweiten Behälter (3b) des ersten Typs aufzunehmen, dass die Rührvorrichtung (22) Kopplungsmittel umfasst, die eingerichtet sind, um mindestens den ersten und den zweiten Behälter (3a, 3b) des ersten Typs rotierend zu koppeln, wenn der erste und der zweite Behälter (3a, 3b) im Gestell (11) aufgenommen werden, wobei die Kopplungsmittel ausgelegt sind, um mindestens den zweiten Behälter (3b) rotierend anzutreiben, wenn der erste Behälter (3a) rotierend angetrieben wird, und dass die Rührvorrichtung (22) mindestens ein erstes und ein zweites Aufnahmeorgan (23) umfasst, die beweglich rotierend im Gestell (11) eingebaut sind, und jeweils zwei Aufnahmesitze (25) eingrenzen, die ausgelegt sind, um, bei Einsatzbedingungen, die ersten beziehungsweise zweiten Behälter (3a, 3b) unterzubringen, wobei jedes der ersten und der zweiten Aufnahmeorgane (23) an seiner Außenfläche eine Kopplungsverzahnung (27) beinhaltet, wobei die Kopplungsverzahnungen (27) des ersten und des zweiten Aufnahmeorgans (23) mindestens teilweise die Kopplungsmittel bilden, wobei die Kopplungsmittel ferner mindestens ein Kopplungsorgan (33) beinhalten, das beweglich rotierend im Gestell (11) eingebaut ist, und eingerichtet ist, um die Kopplungsverzahnungen (27) des ersten und des zweiten Aufnahmeorgans (23) rotierend zu koppeln.

2. Analyseanordnung nach Anspruch 1, wobei jedes der ersten und der zweiten Aufnahmeorgane (23) einen Aufnahmeabschnitt (24) beinhaltet, der den entsprechenden Aufnahmesitz (25) eingrenzt, wobei der Aufnahmeabschnitt (24) jedes der ersten und der zweiten Aufnahmeorgane (23) im Wesentlichen zylindrisch ist und sich mindestens teilweise in einem komplementär geformten Durchgangsweg (26) erstreckt, der im Gestell (11) angeordnet ist.

3. Analyseanordnung nach Anspruch 2, wobei jedes der ersten und der zweiten Aufnahmeorgane (23) ferner einen im Wesentlichen zylindrischen Einbauabschnitt (29) umfasst, der sich koaxial in Bezug auf den entsprechenden Aufnahmeabschnitt (24) erstreckt, wobei der Einbauabschnitt (29) jedes der ersten und der zweiten Aufnahmeorgane (23) frei rotierend in einer Bohrung (31) eingebaut ist, die im Gestell (11) angeordnet ist, und gegenüber dem Durchgangsweg (26) ausmündet, in dem der entsprechende Aufnahmeabschnitt (24) eingebaut ist.

4. Analyseanordnung nach einem der Ansprüche 1 bis 3, wobei jedes der ersten und der zweiten Aufnahmeorgane (23) Immobilisierungsmittel umfasst, die eingerichtet sind, um den entsprechenden Behälter, der im Aufnahmeorgan (23) untergebracht ist, bei Einsatzbedingungen, rotierend zu immobilisieren.

5. Analyseanordnung nach Anspruch 4, wobei die Immobilisierungsmittel jedes der ersten und der zweiten Aufnahmeorgane mindestens eine Immobilisierungsrippe (28) beinhalten, die dazu bestimmt ist, mit einer komplementären Immobilisierungsrille zusammenzuwirken, die an der Außenwand des entsprechenden Behälters (3a, 3b) angeordnet ist.

6. Analyseanordnung nach einem der Ansprüche 1 bis 5, wobei mindestens eines der ersten und der zweiten Aufnahmeorgane (23) Translationsblockierungsmittel umfasst, die eingerichtet sind, um das Aufnahmeorgan (23) in Bezug auf das Gestell (11) translatorisch zu blockieren.

7. Analyseanordnung nach einem der Ansprüche 1 bis 6, wobei die Positionshaltemittel eine Vielzahl von Einschnitten (19) umfassen, die bestimmt sind, um jeweils mit dem Hals (6) eines stationären Behälters (4) zusammenzuwirken, der im Lagerungssitz (12) aufgenommen wurde.

8. Analyseanordnung nach Anspruch 7, wobei sich jeder der Einschnitte (19) im Wesentlichen perpendikular zu den Drehachsen der Aufnahmeorgane (23) erstreckt.

9. Analyseanordnung nach einem der Ansprüche 1 bis 8, wobei das Gestell (11) einen Haltegriff (21) beinhaltet, der ausgelegt ist, um das Einführen und das Entfernen des Gestells (11) in und aus dem Analysegerät zu ermöglichen.

## Claims

1. An analysis set (2) for an analysis apparatus, comprising:
- a carrier (11) intended to be inserted in the analysis apparatus, the carrier (11) being adapted to receive at least one first container (3a) of a first type, the carrier (11) comprising:
a storage housing (12) intended to receive a plurality of stationary containers (4) of a second type each provided with a neck (6) equipped with a closing device (7), and
position holding means arranged to cooperate with the necks (6) of the stationary containers (4) when the stationary containers are received in the storage housing (12),
- a stirring device (22) adapted to be mounted on the carrier (11) and intended to cooperate with a driving unit of an analysis apparatus, the stirring device (22) being arranged to rotatably drive at least the first container (3a) of the first type when said first container (3a) is received on the carrier (11) and when the stirring device (22) cooperates with the driving unit of the analysis apparatus,
**characterized in that** the carrier (11) is adapted to receive at least a second container (3b) of the first type, **in that** the stirring device (22) comprises coupling means arranged to rotatably couple at least the first and second containers (3a, 3b) of the first type when said first and second containers (3a, 3b) are received on the carrier (11), the coupling means being shaped to rotatably drive at least the second container (3b) when the first container (3a) is rotatably driven, and **in that** the stirring device (22) comprises at least a first and a second receiving members (23) movably mounted in rotation on the carrier (11) and respectively delimiting two receiving housing (25) shaped to house, in use, respectively the first and second containers (3a, 3b), each of the first and second receiving members (23) including on its outer surface a coupling toothing (27), the coupling toothings (27) of the first and second receiving members (23) forming at least in part the coupling means, the coupling means further including at least one coupling member (33) movably mounted in rotation on the carrier (11) and arranged to rotatably couple the coupling toothings (27) of the first and second receiving members (23).

2. The analysis set according to claim 1, wherein each of the first and second receiving members (23) includes a receiving portion (24) delimiting the corresponding receiving housing (25), the receiving portion (24) of each of the first and second receiving members (23) being substantially cylindrical, and extending at least in part in a through passageway (26) with a complementary shape and arranged on the carrier (11).

3. The analysis set according to claim 2, wherein each of the first and second receiving members (23) further comprises a mounting portion (29) substantially cylindrical and extending coaxially with respect to the corresponding receiving portion (24), the mounting portion (29) of each of the first and second receiving members (23) being movably mounted in rotation in a bore (31) arranged on the carrier (11) and opening opposite the through passageway (26) in which the corresponding receiving portion (24) is mounted.

4. The analysis set according to any of claims 1 to 3, wherein each of the first and second receiving members (23) comprises immobilization means arranged to rotatably immobilize, in use, the corresponding container housed in said receiving member (23).

5. The analysis set according to claim 4, wherein the immobilization means of each of the first and second receiving members include at least one immobilization rib (28) intended to cooperate with a complementary immobilization groove arranged on the outer wall of the corresponding container (3a, 3b).

6. The analysis set according to any of claims 1 to 5, wherein at least one of the first and second receiving members (23) comprises translation blocking means arranged to block in translation said receiving member (23) relative to the carrier (11).

7. The analysis set according to any of claims 1 to 6, wherein the position holding means comprise a plurality of notches (19) each intended to cooperate with the neck (6) of a stationary container (4) received in the storage housing (12).

8. The analysis set according to claim 7, wherein each of the notches (19) extends substantially perpendicular to the axes of rotation of the receiving members (23).

9. The analysis set according to any of claims 1 to 8, wherein the carrier (11) includes a holding handle (21) shaped to enable insertion and retrieval of the carrier (11) in and out of the analysis apparatus.
